Europäisches Patentamt

European Patent Office

Office européen des brevets

(19)

(11) Veröffentlichungsnummer: **0 331 816 B1**

(12) **EUROPÄISCHE PATENTSCHRIFT**

(45) Veröffentlichungstag der Patentschrift: **26.02.92**

(51) Int. Cl.5: **F16B 13/08**, F16B 13/12

(21) Anmeldenummer: **88121552.9**

(22) Anmeldetag: **23.12.88**

(54) **Schlagspreizdübel.**

(30) Priorität: **27.02.88 DE 3806353**

(43) Veröffentlichungstag der Anmeldung:
**13.09.89 Patentblatt 89/37**

(45) Bekanntmachung des Hinweises auf die
Patenterteilung:
**26.02.92 Patentblatt 92/09**

(84) Benannte Vertragsstaaten:
**AT BE CH ES FR GB IT LI NL**

(56) Entgegenhaltungen:
**EP-A- 0 170 779**
**EP-A- 0 245 865**
**DE-A- 3 205 928**
**DE-U- 7 822 474**
**FR-A- 674 461**

(73) Patentinhaber: **fischer-werke Artur Fischer
GmbH & Co. KG
Weinhalde 14-18
W-7244 Waldachtal 3/Tumlingen(DE)**

(72) Erfinder: **Fischer, Artur, Prof.Dr.h.c.
Weinhalde 34
W 7244 Waldachtal 3 Tumlingen(DE)**

(74) Vertreter: **Ott, Elmar, Dipl.-Ing.
fischerwerke Artur Fischer GmbH & Co KG
Weinhalde 14-18
W-7244 Waldachtal 3/Tumlingen(DE)**

## Beschreibung

Die Erfindung betrifft einen Schlagspreizdübel gemäß der Gattung des Hauptanspruchs.

Aus der DE-OS 32 05 928 ist ein Schlagspreizdübel für die Verankerung in insbesondere konisch nach innen erweiterten Bohrlöchern bekannt, der eine Spreizhülse besitzt, in die ein Spreizkörper beim Einschlagen des Schlagspreizdübels eindringt. Der Spreizkörper stützt sich dabei am Bohrlochgrund ab. Die aufgespreizte Spreizhülse greift in eine Hinterschneidung eines Bohrlochs ein, wodurch eine formschlüssige Verbindung zwischen Schlagspreizdübel und Mauerwerk entsteht. Damit bei einer an der Spreizhülse angreifenden Auszugslast diese nicht vom Spreizkörper abgezogen werden kann, besitzt der Schaft des Spreizkörpers eine umlaufende Nut, in der ein gegen die Wandung der Innenbohrung der Spreizhülse drückender Ring eingesetzt ist. Der Ring sichert somit bei eingeschlagenem Schlagspreizdübel die Verbindung zwischen Spreizhülse und Schaft des Spreizkörpers . Hierfür ist es jedoch erforderlich, daß der Spreizkörper auch tatsächlich so weit in die Spreizhülse eindringt, damit die gewünschte formschlüssige Verbindung mittels des Ringes entsteht. Eine derart exakte Positionierung erfordert ein entsprechend exakt ausgeführtes Bohrloch, da die Tiefe des Bohrloches im wesentlichen die Position des Spreizkörpers und damit die Position des Ringes definiert.

Der Erfindung liegt die Aufgabe zugrunde, einen Schlagspreizdübel zu schaffen der mit möglichst wenigen Teilen auskommt und im eingeschlagenen Zustand eine sichere Verbindung zwischen Spreizhülse und Spreizkörper gewährleistet.

Die Lösung dieser Aufgabe wird bei einem Schlagspreizdübel der eingangs genannten Gattung durch die im kennzeichnenden Teil des Hauptanspruchs angegebenen Merkmale erhalten. Die am Schaft und an der Wandung der Innenboh-rung der Spreizhülse ausgebildeten Rastprofilierun-gen können durch eine entsprechende Form ihres Profils eine formschlüssige Verbindung zwischen Spreizhülse und Schaft des Spreizkörpers herstellen. Wird das Profil schuppenförmig oder sägezahnförmig ausgebildet, so kann dadurch das Aufschieben der Spreizhülse auf den Spreizkörper erleichtert werden, während ein späteres Abrutschen der Spreizhülse vom Spreizkörper sicher verhindert werden kann.

Der Abschnitt der Spreihülse, wo sich die Profilierung an der Bohrung befindet, ist wenigstens mit einem Längsschlitz versehen, wodurch dieser Abschnitt beim Eindringen des Schaftes des Spreizkörpers radial elastisch nachgeben kann. In den Rastpositionen federt die Spreizhülse zurück und verringert dabei ihren Innendurchmesser, so daß ein sicheres Einrasten gewährleistet ist.

Die Erfindung wird nachfolgend anhand der Zeichnung näher erläutert.

Es zeigen:

Figur 1 einen Schlagspreizdübel mit sägezahnförmigen Rastprofilierungen und

Figur 2 den Schlagspreizdübel gemäß Figur 1, eingeschlagen in ein Bohrloch mit konischer Hinterschneidung.

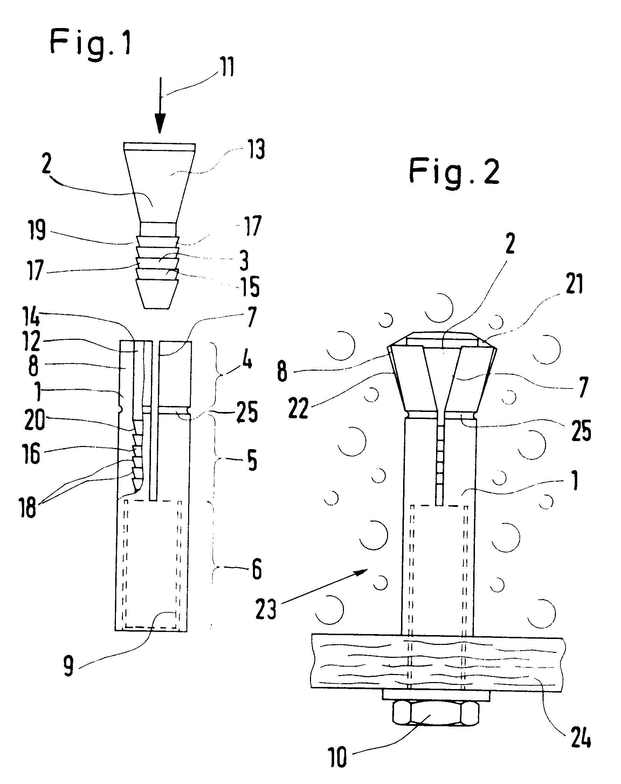

Der in Figur 1 dargestellte Schlagspreizdübel besteht aus einer Spreizhülse 1 und einem Spreizkörper 2 mit Schaft 3. Die Spreizhülse 1 besteht aus einem Spreizbereich 4, einem Rastbereich 5 und einem Befestigungsbereich 6. Der Spreizbereich 4 und der Rastbereich 5 sind mit vier Längsschlitzen versehen, von denen die beiden Längschlitze 7, 8 sichtbar sind. Am Befestigungsteil 6 ist ein Innengewinde 9 ausgebildet, in welches eine Befestigungsschraube 10 (Figur 2) einschraubbar ist.

Vor der Montage wird der Spreizkörper 2 in Pfeilrichtung 11 in die Innenbohrung 12 der Spreizhülse 1 eingeschoben, bis der Spreizkonus 13 am Rand 14 der Spreizhülse 1 anliegt. In dieser Position ist der Spreizbereich 4 noch nicht aufgespreizt, jedoch greifen am Schaft 3 und an der Innenbohrung 12 vorgesehene Rastprofilierungen 16, 15 z. T. ineinander ein. Der Spreizkörper 2 ist somit schon vor der Montage in der Spreizhülse 1 gegen Herausfallen gesichert.

Die Rastprofilierungen 15, 16 sind im vorliegenden Fall als im Querschnitt sägezahnförmige Ringnuten 17, 18 ausgebildetes kann auch von einer schuppenförmigen Rastprofilierung gesprochen werden. Die Schrägen 19, 20 der einzelnen Ringnuten 17, 18 sind so ausgerichtet, daß das Einsetzen des Spreizkörpers 2 in Pfeilrichtung 11 problemlos erfolgen kann, während nach dem Einschlagen des Schlagspreizdübels, wie in Figur 2 dargestellt, die Spreizhülse 1 nicht mehr vom Spreizkörper 2 abgezogen werden kann. Die Rastprofilierungen 15, 16 greifen nach dem Einschlagen wie entgegengesetzt gerichtete Schuppen aneinander an, so daß eine äußerst sichere Verbindung zwischen Spreizhülse 1 und Spreizkörper 2 entsteht.

In Figur 2 ist der in ein Bohrloch 21 eingesetzte Schlagspreizdübel dargestellt, der mit seinem Spreizbereich 4 in eine Hinterschneidung 22 formschlüssig eingreift. An der Wand des Mauerwerks 23 ist mittels einer Shraube 10 eine Holzlatte 24 befestigt.

Anstelle der im dargestellten Ausführungsbei-spiel verwendeten sägezahnförmigen Rastprofilie-rung kann auch eine andere Profilierung Verwendung finden, die ein Abziehen der Spreizhülse 1 vom Spreizkörper 2 bei Belastung sicher verhindert. Wesentlich ist jedoch, daß in Rastabschnitt 5 wenigstens ein Längsschlitz 7 vorhanden ist, damit dieser Bereich der Spreizhülse 1 radial elastisch federn kann.

Zwischen Spreizbereich 4 und Rastbereich 5 ist eine Ringnut 25 ausgebildet, mit der die Bereiche 4 , 5 definiert unterteilt werden.

Es wird noch angemerkt, daß insbesondere bei kleineren Durchmessern der Innenbohrung 12 anstelle von sägezahnförmigen Ringnuten ein sägezahnförmiges Innengewinde als Rastprofilierung 16 Verwendung finden kann. In entsprechender Weise kann dann auch am Schaft 3 ein sägezahnförmiges Gewinde als Rastprofilierung 15 vorgesehen sein. Für bestimmte Anwendungsbereiche können auch Gewinde Verwendung finden, die keine spezielle Profilierung aufweisen.

## Patentansprüche

1. Schlagspreizdübel für die Verankerung in insbesondere konisch nach innen erweiterten Bohrlöchern, bestehend aus einer geschlitzten Spreizhülse (1) und einem die Spreizhülse (1) in einem Spreizbereich (4) aufweitenden Spreizkörper (2), der einen in der Innenbohrung (12) der Spreizhülse (1) geführten Schaft (3) aufweist, **dadurch gekennzeichnet**, daß der den Schaft (3) des Spreizkörpers (2) umschließende Abschnitt (5) der Spreizhülse (1) wenigstens einen Längsschlitz (7, 14) hat, und daß der Schaft (3) und die Wandung der Innenbohrung (12) ineinandergreifende Rastprofilierungen (15, 16) haben.

2. Schlagspreizdübel nach Anspruch 1, **dadurch gekennzeichnet**, daß die Rastprofilierungen (15, 16) als Ringnuten (17, 18) oder als Gewinde ausgebildet sind.

3. Schlagspreizdübel nach Anspruch 2, **dadurch gekennzeichnet,** daß die Ringnuten (17, 18) oder Gewinde im Querschnitt sägezahnförmig ausgebildet sind.

4. Schlagspreizdübel nach einem der vorhergehenden Ansprüche, **dadurch gekennzeichnet**, daß die Rastprofilierungen (15, 16) von Schaft (3) und Wandung der Innenbohrung (12) schuppenförmig ineinandergreifen und den Spreizkörper (2) gegen Herausrutschen aus der Spreizhülse (1) sichern.

5. Schlagspreizdübel nach einem der vorhergehenden Ansprüche, **dadurch gekennzeichnet**, daß der geschlitzte Abschnitt (5) ein radial elastischer Rastabschnitt mit in Auszugsrichtung des Spreizkörpers (2) an dessen Schaft (3) wirksamer Verzahnung ist.

## Claims

1. Hammer-in expansible plug for anchoring in drilled holes, especially holes that widen conically inwards, comprising a slotted expansible sleeve (1) and an expander member (2) that causes the expansible sleeve (1) to widen in an expansion region (4) and that has a shaft (3) that is guided in the internal bore (12) in the expansible sleeve (1), characterised in that the portion (5) of the expansible sleeve (1) that surrounds the shaft (3) of the expander member (2) has at least one longitudinal slot (7, 14), and that the shaft (3) and the wall of the internal bore (12) have locking shapes (15, 16) that engage one another.

2. Hammer-in expansible plug according to claim 1, characterised in that the locking shapes (15, 16) are in the form of annular grooves (17, 18) or of a thread.

3. Hammer-in expansible plug according to claim 2, characterised in that the annular grooves (17, 18) or thread are saw-toothed in cross-section.

4. Hammer-in expansible plug according to any one of the preceding claims, characterised in that the locking shapes (15, 16) of the shaft (3) and the wall of the internal bore (12) engage one another in the manner of scales and secure the expander member (2) against sliding out of the expansible sleeve (1).

5. Hammer-in expansible plug according to any one of the preceding claims, characterised in that the slotted portion (5) is a radially resilient locking portion having a toothing that acts on the shaft (3) of the expander member (2) in the withdrawal direction of the expander member.

## Revendications

1. Cheville d'ancrage expansible par percussion, destinée à être ancrée dans un trou évasé en cône vers l'intérieur et composée d'une douille expansible (1) fendue et d'un élément dilateur (2) qui dilate une partie expansible (4) de cette douille (1) et qui comporte une queue (3) passant dans l'alésage (12) de ladite douille (1), cheville caractérisée en ce que la partie (5) de la douille expansible (1) qui entoure la queue (3) de l'élément dilateur (2) présente au moins une fente longitudinale (7, 8), et en ce que cette queue (3) et la paroi de l'alésage (12) présentent des crantages (15, 16) qui s'interpénètrent.

**2.** Cheville expansible par percussion selon la revendication 1, caractérisée en ce que les crantages (15, 16) sont formés par des gorges annulaires (17, 18) ou par des filetages.

**3.** Cheville expansible par percussion selon la revendication 2, caractérisée en ce que les gorges annulaires (17, 18) ou les filetages ont une section en dents de scie.

**4.** Cheville expansible par percussion selon l'une des revendications précédentes, caractérisée en ce que les crantages (15, 16) de la queue (3) et de la paroi de l'alésage (12) s'imbriquent et empêchent l'élément dilateur (2) de sortir en glissant de la douille (1).

**5.** Cheville expansible par percussion selon l'une des revendications précédentes, caractérisée en ce que la partie fendue (5) est une partie crantée, élastique radialement, et qui présente une denture dont l'action sur la queue (3) de l'élément dilateur (2) s'exerce dans un sens (destiné à s'opposer) à l'extraction de cet élément (2).

Fig.1

Fig.2